# EUROPEAN PATENT SPECIFICATION

(11) **EP 1 494 886 B1**
(45) Date of publication and mention of the grant of the patent: **02.12.2009**
(21) Application number: 03704773.5
(22) Date of filing: 10.02.2003
(51) Int. Cl.: B60K 6/365, B60K 6/48, B60K 17/346, B60K 23/08

(54) **VEHICLE TRANSMISSION SYSTEM**
FAHRZEUGGETRIEBESYSTEM
SYSTEMES DE TRANSMISSION POUR VEHICULE

(30) Priority: 08.02.2002 GB 0203026; 26.04.2002 GB 0209654
(43) Date of publication of application: 12.01.2005
(73) Proprietor: RICARDO UK LIMITED, Shoreham-by-Sea, West Sussex BN43 5FG (GB)
(72) Inventor: LIPMAN, John, Michael, Elmdown House, Warwickshire CV37 7SU (GB); WHEALS, Jonathan, Charles Barley Wood, Leicestershire LE11 3RA (GB)
(74) Representative: Chettle, Adrian John
(86) International application number: PCT/GB2003/000569
(87) International publication number: WO 2003/066363

(56) References cited:
- WO-A-02/09966
- DE-A- 3 912 895

## Description

The present invention relates to vehicle transmission systems and is particularly, though not exclusively, concerned with transmission systems for four wheel drive vehicles.

Automotive differentials are of course well known and include a single input shaft, normally connected to the output shaft of the vehicle gearbox, and two output shafts which are permitted to rotate at different speeds. The mean of these two speeds is directly proportional to the input speed. When a vehicle travels on a radius, that is to say goes round a corner, the outer wheels travel further than the inside wheels in the same time and must therefore rotate faster. The basic differential caters for this speed difference but the torque supplied to both wheels remains the same. However, there are many circumstances in which it is desirable for the torque supplied to the two wheels to differ. Thus if one wheel is on a low friction surface, e.g. ice, and the other on a high friction surface, e.g. a dry patch of roadway, the maximum torque that can be transmitted to the two wheels by a conventional differential is limited to the very low torque value which may be transmitted to that wheel which is in contact with the ice. The potential propulsive force available through the wheel in engagement with the high friction surface cannot be used and the propulsive force exerted may therefore be insufficient to move the vehicle. A vehicle cornering with a high lateral acceleration has a significant weight transfer from the inside wheels onto the outer wheels. As a result of the reduced weight on the inside wheels, only a low torque can be transmitted through the inside driven wheel before wheel slip occurs and this means that, with a conventional differential, only the same low torque may be transmitted to the outer driven wheel. This severely limits the potential acceleration of the vehicle, when cornering. In order to overcome these disadvantages, numerous devices are known to lock or limit slip in the differential, whereby different levels of torque may be transmitted through the two output shafts.

In the case of a four wheel drive vehicle, there is conventionally a differential between the front and rear axles to accommodate the speed differences between them whilst transmitting power to both axles. In this case also there are many circumstances under which a simple differential is inadequate. A four wheel drive facility is generally provided on vehicles with an excess of power and superior performance could therefore be achieved by transmitting the maximum amount of power through all the wheels. The maximum rate of acceleration can only be achieved if the torque is proportioned between the wheels to match the weight distribution of the vehicle. As a result of dynamic weight transfer, e.g. under heavy acceleration, as much as 80% of the weight may be carried by the rear wheels An unequal torque distribution could be achieved by providing a differential with an invariable torque split to match this proportion but when cornering or driving on an icy road this torque split ratio could result in vehicle instability and thus loss of control. Under these conditions it would be advantageous for a higher proportion of the torque to be provided to the front axle.

In the case of "off road" vehicles, which frequently have a short wheel base and a high centre of gravity, the weight transfer when climbing a steep gradient could be as much as 90% onto the rear axle. A limited slip type of differential could deliver sufficient traction but could also cause slippage of the front wheels, thereby leading to loss of stability. Locking the centre differential, that is to say the differential between the front and rear axles, would prevent front wheel slip but reduces manoeuvrability which is a significant problem on the poor surfaces which are commonly encountered when driving off road.

When descending a steep gradient, the safest technique is to use a low gear ratio and rely solely or principally on engine braking to maintain control. Under these circumstances, the weight transfer that occurs may place as much as 90% of the vehicle weight onto the front axle.

British Patent Application No. 0117283.2 discloses a transmission system for use in a four wheel drive vehicle for transferring the torque between the front and rear axles in accordance with requirements. The transmission system disclosed therein includes an epicyclic differential mechanism, the annulus of which constitutes the input of the transmission and the carrier and sun wheel of which constitute its two outputs which are connected, in use, to respective pairs of driven wheels of the vehicle. The two output shafts carry first and second coaxial sun wheels of an epicyclic gear system which mesh with first and second sets of planet wheels, respectively. The epicyclic gear system includes a third sun wheel, which is coaxial with the first and second sun wheels and is in mesh with a third set of planet wheels. The gear ratios of the first sun wheel with the first set of planet wheels, the second sun wheel with the second set of planet wheels and the third sun wheel with the third set of planet wheels are different. Each first planet wheel is connected to respective second and third planet wheels to rotate therewith about a respective common planet shaft. The planet shafts are connected to a common carrier which is rotatably mounted coaxially with the sun wheels. The carrier is connected to a first selectively operable brake and the third sun wheel is connected to a second selectively operable brake. The transmission system includes a sensor arranged to produce a signal indicative of an operating parameter of the vehicle, such as its acceleration, and a controller connected to the sensor and to the two brakes and arranged to operate the brakes in response to the said signal. Operation of the brake connected to the third sun wheel produces a torque transfer from one output shaft to the other and operation of the other brake produces the reverse effect.

The transmission system disclosed in the prior application is extremely effective but it has a relatively high part count and is relatively bulky.

It is therefore the object of the invention to provide a transmission system particularly for four wheel drive vehicles which will split the engine torque between the front and rear axles in a proportion which is variable in dependence on one or more operating parameters of the vehicle or its engine rather than merely limiting the slip of or locking the differential and furthermore is extremely compact.

According to the present invention, there is provided a transmission system for a vehicle, the transmission system including an input shaft connected to a differential mechanism, which has two output shafts, the two output shafts carrying first and second coaxially mounted sun wheels, respectively, of an epicyclic gear system which mesh with first and second sets of planet wheels, respectively, the gear ratios of the first sun wheel with the first set of planet wheels and the second sun wheel with the second set of planet wheels being different, each first planet wheel being connected to a respective second planet wheel to rotate therewith about a respective common planet shaft, the planet shafts being connected to a common carrier which is rotatably mounted coaxially with the first and second sun wheels, a single selectively operable speed changing means, which is connected to the carrier and is arranged to increase or decrease the speed of rotation of the carrier about its axis, the transmission system further including at least one sensor arranged to produce a signal indicative of an operating parameter of the vehicle or its engine and a controller connected to the sensor and to the speed changing device and arranged to operate the speed changing device in response to the said signal,
**characterised in that** the speed changing means is an electric motor/generator, the rotor of which is connected to the common carrier by selectively operable coupling means and to one of the input shaft and the two output shafts by second selectively operable coupling means.

Thus a four wheel drive vehicle incorporating a transmission system in accordance with a preferred embodiment of the invention will typically include not only a front differential splitting speed and/or torque between the two front driven wheels, a rear differential splitting speed and/or torque between the two rear driven wheels and a centre differential splitting speed between the front and rear axles but also an epicyclic gear system, which is connected to the two outputs of the centre differential and includes speed changing means which are actuated by a controller in response to a signal received from one or more sensors which detect respective operating parameters of the vehicle or its engine to increase or decrease the speed of the common carrier and thus to split the engine torque between the front and rear axles in a proportion which is the optimum for the prevailing operating conditions.

The transmission system in accordance with the earlier British Patent Application G8 2001 0017 283 carrying the priority No. GB2000 0018509. 9 included a third set of planet wheels in mesh with a third sun wheel and two brakes or speed changing devices. However, in the transmission system in accordance with the present invention, the third sun wheel and associated set of planet wheels are omitted and only a single speed changing means is provided, in the form of an electric motor/generator arranged to speed up or slow down the common carrier. It is appreciated that the ability both to slow down and speed up the common carrier renders it unnecessary to be able to slow down the sun wheels and that speeding up the common carrier has the same effect as slowing down the sun wheels. Varying the speed of the carrier varies the proportion of the engine torque supplied to the two outputs.

Whilst the invention is particularly applicable to four wheel drive vehicles for varying the proportion of the torque supplied to the front and rear axles, it has such a compact construction that it may be used as a simple differential mechanism to vary the proportion of the torque supplied to two wheels on the same axle. Thus the transmission system in accordance with the present invention may be used also between the two driven wheels of a two wheel drive vehicle. In addition, three such transmission systems could be used on a four wheel drive vehicle, the first varying the torque distribution between the two front wheels, the second varying the distribution of torque between the two rear wheels and the third varying the distribution of torque between the front and rear axles.

The electric motor constituting the speed varying means is a relatively bulky and expensive component and whilst its primary purpose is to increase or decrease the speed of rotation of the carrier about its axis, so as to vary the ratio of the torque applied to the two output shafts, the present invention also offers the possibility of assigning one or more further functions to the same motor, thereby rendering the transmission system suitable for use in a hybrid electric vehicle including parallel and hybrid series types. Thus the rotor of the electric motor/generator is connected to the common carrier by first selectively operable coupling means and to one of the input shaft and the two output shafts by second selectively operable coupling means. In use, the electrical stator connections of the motor/generator will be connected to a battery. The first and second selectively operable coupling means are preferably clutches, e. g. cheap and simple clutches, such as dog clutches. These clutches are controlled by the power controller, that is to say the engine management system, and when the motor/generator is required to alter the speed of the carrier of the transmission system, the first clutch is engaged and the second clutch disengaged and the transmission system operates as described above. However, if greater torque is required on the output shafts than the engine is capable of providing, the first clutch may be disengaged and the second clutch engaged, thereby connecting the motor/generator to the input shafts or one of the output shafts. Electric power may then be supplied from the battery to the motor/generator, again under the control of the engine management system, to supply power to the shaft to which the rotor of the motor/generator is connected. Furthermore, if the engine is in the overrun condition and no power is being supplied from the engine to the output shafts, the motor/generator will be driven, with the clutches in the positions referred to above, by the shaft to which it is connected and will then operate as a generator and will produce electric power which can be used to recharge the battery. The motor/generator unit thus serves a dual function and the power which it produces during regenerative braking is sufficient to allow the conventional vehicle alternator to be reduced in size, that is to say downrated, or even dispensed with entirely.

If the motor/generator is connected to one of the two output shafts of the transmission, this will unbalance the power output from the transmission and whilst this may be readily tolerated or compensated for, it is preferred that the motor/generator is connected to the input shaft of the transmission. It is then preferred that the input shaft includes third selectively operable coupling means, e.g. a further dog clutch under the control of the engine management system, at a position between its connection to the rotor of the motor/generator and its connection to the differential mechanism. The provision of this third clutch permits the motor/generator to assume yet a further function, namely that of the engine starter motor. This permits the conventional starter motor and the associated ring gear on the engine output shaft to be dispensed with. Thus if the first and third clutches are disengaged and the second clutch engaged and the motor/generator then operated as a motor, it will rotate the engine and not the transmission system and thus cause the engine to start.

The invention also embraces a four wheel drive vehicle including such a transmission system, an engine with an output shaft, which is connected to the input shaft of the transmission system, and two pairs of driven wheels which are connected to a respective one of the two output shafts of the transmission system. As explained above, the electrical connections of the stator of the motor/generator will in practice be connected to a battery arranged selectively to drive the motor/generator or to be recharged by it.

Further features and details of the invention will be apparent from the following description of two specific embodiments of transmission systems in accordance with the invention which is given by way of example only with reference to the three accompanying highly schematic drawings which illustrate three embodiments of the present invention.

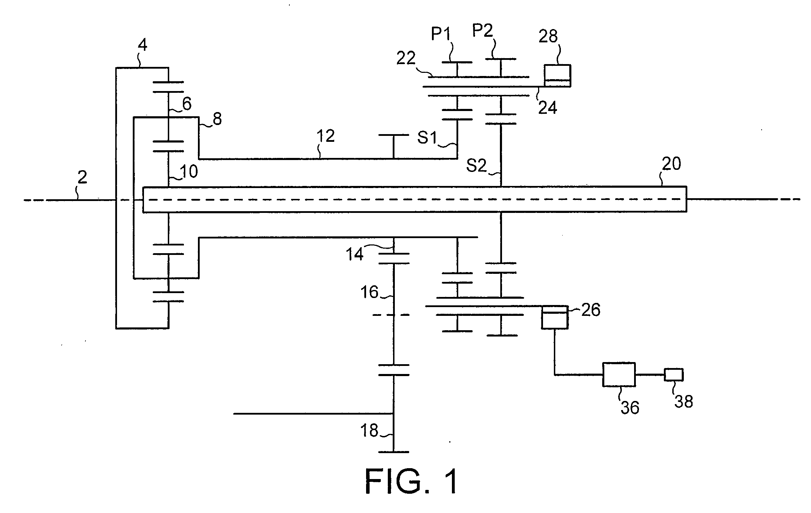

Figure 1 shows a transmission system with an input shaft 2 which, in use, will be connected to or constitute part of the output from the gearbox of the vehicle engine. The shaft 2 is connected to the annulus 4 of an epicyclic differential. Formed on the interior of the annulus 4 is an annular array of gear teeth with which the teeth on a number of planet gears 6 mesh. The planet gears 6 are carried by a common carrier 8 and mesh with a sun gear 10. The carrier 8 is connected to a first hollow output shaft 12 which is connected to the front axle of the vehicle, not shown, by way of a gear train 14,16,18. The sun gear 10 is carried by a shaft 20 which is connected to the rear axle, typically through the rear differential.

The output shafts 12 and 20 are connected to a further epicyclic differential gear system which splits the torque transmitted through the two output shafts in a manner appropriate to the operating conditions of the vehicle. The front wheel output shaft 12 carries a sun gear S1 and the rear wheel output shaft 20 carries a coaxial sun gear S2. The two sun wheels S1 and S2 are in mesh with respective sets of three planet wheels P1 and P2. The various planet wheels are associated with one another in three groups, each group including a first planet wheel P1 and a second planet wheel P2, connected together to form a composite unit. Each composite planet unit P1, P2 is mounted to rotate about a respective planet shaft 22. The three planet shafts 22, which extend parallel to the output shafts 12 and 20, are connected to a common carrier 24. The carrier 24 is connected to the rotor 26 of an electric motor which also includes a stator 28, which is connected to a fixed structure, e.g. the outer casing of the epicyclic torque splitting differential system.

The motor 26, 28 is connected to a power source (not shown) and is operated under the control of an electronic controller 36. Connected to the controller is a plurality of sensors, of which only one, 38, is shown schematically, arranged to sense, and produce a signal representative of, a number of operating parameters of the vehicle and/or its engine, such as the vehicle speed, the steering wheel angle, the acceleration of the vehicle in each of three orthogonal directions, engine speed, engine torque, yaw rate, which engine gear is engaged, the differential output speed and torque supplied to the front axle and the differential output speed and torque supplied to the rear axle.

In a specific embodiment, the sun wheels S1 and S2 had 23 and 21 teeth, respectively, whilst each planet wheel P1 and P2 had 12 and 12 teeth, respectively. The gear ratios of each meshing sun wheel and set of planet wheels are therefore different.

It will be appreciated that, in use, actuation of the motor 26, 28 to increase or decrease the speed of rotation of the carrier induces a ratio change across the sun gears S1 and S2. This in turn produces a torque transfer between the rear output shaft 20 and the front output shaft 12. This small ratio change produces a small tyre slip which is responsible for the torque difference between the axles. For example, a tyre slip difference of less than 0.5% produces a torque bias ratio of 11.5, i.e. 92% to one axle and 8% to the other (i.e. a bias ratio of 92/8). By using pre-programmed algorithms, the controller can proportion the torque between the front and rear axles to optimise the vehicle performance.

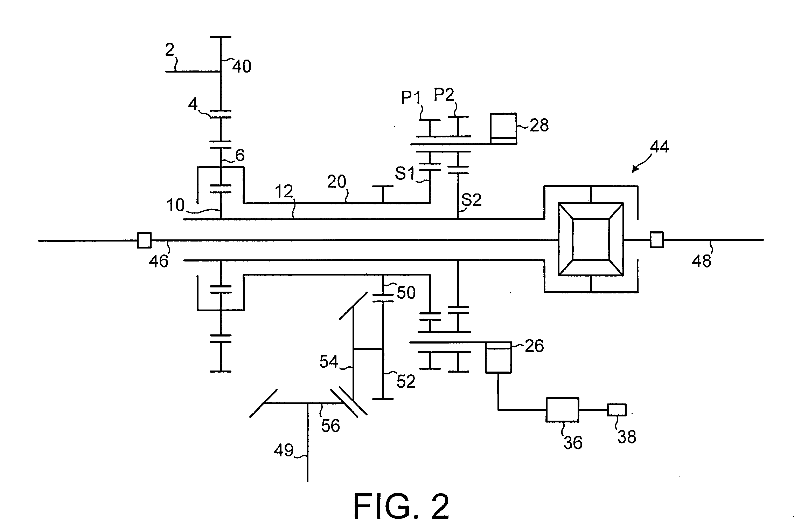

The transmission system described above has essentially a "north-south" configuration, that is to say the transmission input extends in the fore- and- aft direction of the vehicle parallel to the drive shaft to the front and rear axles. However, the present invention is also applicable to a transmission system of "east-west" configuration in which the transmission inlet shaft extends in the transverse direction of the vehicle perpendicular to the drive shaft to the rear axle. Such a transmission system is illustrated in Figure 2, in which the same reference numerals as in Figure 1 are used to designate similar components.

The transmission input shaft 2 transmits torque via gear wheel 40 to the annulus 4 of the centre epicyclic differential with which the teeth of a number of planet wheels 6 mesh. The output shaft 12 for the front wheels is connected to rotate with the sun wheel 10 and is connected to a standard differential 44 which splits the speed and/or torque between the output shafts 46 and 48 of the two driven front wheels. The output shaft 20 for the rear wheels is connected to the carrier of the planet wheels 6 and to the drive shaft 49 for the rear wheels via gear wheels 50, 52, 54 and 56. In other respects, the construction of this embodiment is the same as that of the first embodiment described above in connection with Figure 1 and will therefore not be described again.

It will be appreciated that the ability to vary the split of torque between the front and rear axles of a four wheel drive vehicle in accordance with operating conditions, particularly in accordance with the division of the vehicle weight between the front and rear axles, will produce numerous advantages. These include maximising the potential acceleration of the vehicle by continuously varying the distribution of the torque between the front and rear axles to match the distribution of the static and dynamic weight of the vehicle between those axles. The ability of the vehicle to ascend or descend a gradient, either forwards or backwards, may be optimised by varying the distribution of torque between the front and rear axles to match the weight distribution. The cornering performance of the vehicle may also be optimised by varying the torque distribution between the front and rear axles to optimise the tyre slip angle, the side forces and the traction characteristics whilst entering, passing through and leaving a corner. The vehicle stability may also be maximised, especially under high speed and adverse weather conditions.

Due to the fact that a significant proportion of the weight of a vehicle is shifted forwardly onto the front axle during braking, the front wheel brakes of a vehicle need to have a performance capability of e.g. two to three times that of the rear wheel brakes. However, it will be appreciated that the ability of the transmission system in accordance with the present invention to transfer torque between the front and rear axles under drive conditions can be used to transfer torque between the two axles under braking conditions also. This facility will enable the rear brakes to be sized to match the front brakes, which is currently not necessary, and thus enable the vehicle to achieve a substantially enhanced braking capability by comparison with known vehicles.

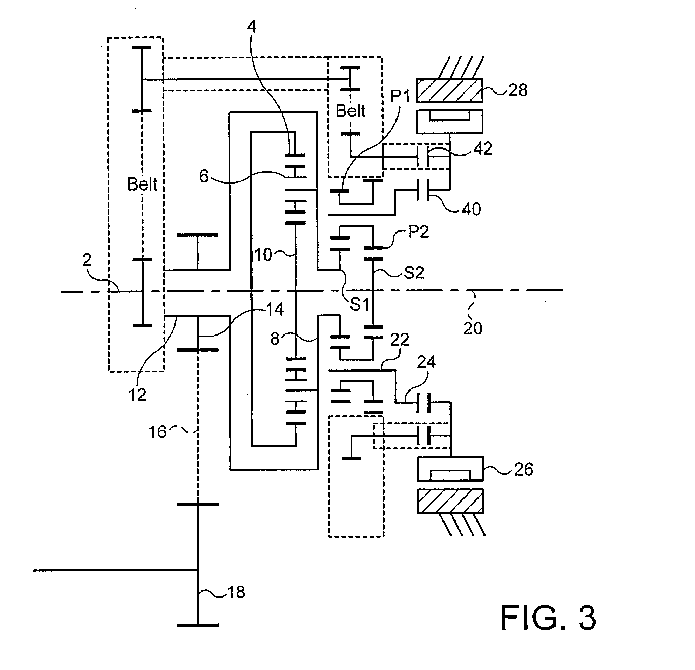

Figure 3 shows a further embodiment which is very similar to that of Figure 1 and has all the same features and advantages. The same reference numerals are therefore used to designate the same components. However, the embodiment of Figure 3 is slightly modified to make it suitable for use in a hybrid vehicle. In this case the motor 26, 28 is a motor/generator unit and its rotor 26 is not permanently connected directly to the common carrier 24 but is selectively connectable to it by means of a dog clutch 40. It is also selectively connectable by means of a further dog clutch 42 and a series of belts and/or gear wheels to one of the output shafts or, as in this case, the input shaft 2 of the transmission system.

At those times when the transmission system is or may be required to vary the torque distribution between the front and rear wheels, the clutch 40 is engaged and the clutch 42 disengaged and the transmission system operates precisely as described in connection with Figure 1 with the motor/generator unit 26, 28 acting as a motor powered by the battery to which it is connected. However, if the engine should enter the overrunning condition and no power is being transmitted from the engine to the wheels, the clutch 40 is disengaged and the clutch 42 engaged. The motor generator unit is then driven by the shaft 2 and operated as a generator. It produces electrical power which is used to recharge the battery to which it is connected. If the engine management system determines that more torque is required at the wheels than the engine is supplying and/or is capable of supplying, the clutch 42 is again engaged and the clutch 40 disengaged and the motor/generator unit is caused to act as a motor to supply power to the input shaft 2. The same motor/generator unit may therefore be used not only to control the transmission system but also as the electrical motor/generator unit of a hybrid automotive propulsion system.

In a further modification, which is not illustrated, a further selectively actuable clutch is added to the embodiment of Figure 3. This clutch is provided in the input shaft 2 at a position between the differential mechanism and the position at which the motor/generator unit is coupled to the input shaft. The provision of this clutch permits the motor/generator unit to serve yet a further function, namely as the engine starter motor. Thus if the further clutch and the clutch 40 are disengaged and the clutch 40 is engaged and the motor/generator unit operated as a motor powered by the battery to which it is connected, it will rotate the engine and thus act as a starter motor.

It will be appreciated that the motor/generator unit may be of various types and that instead of being of electrical type, it may be a hydrostatic motor/pump and in this event the electric battery will be replaced by a hydraulic accumulator.

## Claims

1. A transmission system for a vehicle, the transmission system including an input shaft (2) connected to a differential mechanism (4, 6, 8, 10), which has two output shafts (12, 20), the two output shafts carrying first and second coaxially mounted sun wheels (S1, S2), respectively, of an epicyclic gear system which mesh with first and second sets of planet wheels (P1, P2), respectively, the gear ratios of the first sun wheel with the first set of planet wheels and the second sun wheel with the second set of planet wheels being different, each first planet wheel being connected to a respective second planet wheel to rotate therewith about a respective common planet shaft (22), the planet shafts being connected to a common carrier (24) which is rotatably mounted coaxially with the first and second sun wheels, a single selectively operable speed changing means, (26,28) which is connected to the carrier and is arranged to increase or decrease the speed of rotation of the carrier about its axis, the transmission system further including at least one sensor (38) arranged to produce a signal indicative of an operating parameter of the vehicle or its engine and a controller (36) connected to the sensor and to the speed changing means (26, 28) and arranged to operate the speed changing means in response to the said signal,
**characterised in that** the speed changing means is an electric motor/generator (26, 28), the rotor (26) of which is connected to the common carrier (24) by selectively operable coupling means (40) and to one of the input shaft and the two output shafts by second selectively operable coupling means (42).

2. A transmission system according to Claim 1 in which the differential mechanism (4, 6, 8, 10) comprises an epicyclic gearset including an annulus (4) in mesh with a set of planet wheels (6), which are carried by a carrier (8) and are also in mesh with a sun wheel (10), the carrier and the sun wheel being connected to the two output shafts (12, 20).

3. A transmission system according to claim 1 which the rotor (26) of the motor/generator is connected to the input shaft (2) and the input shaft includes third selectively operable coupling means at a position between its connection to the rotor of the motor/generator and its connection to the differential mechanism (4, 6, 8, 10).

4. A four wheel drive vehicle including a transmission system as claimed in any one of the preceding claims, an engine with an output shaft, which is connected to the input shaft of the transmission system, and two pairs of driven wheels which are connected to a respective one of the two output shafts (12, 20) of the transmission system.

5. A vehicle according to Claim 4 in which the electrical connections of the stator of the motor/generator (26, 28) are connected to a battery arranged selectively to drive the motor/generator or to be recharged by it.

## Patentansprüche

1. Getriebesystem für ein Fahrzeug, wobei das Getriebesystem umfasst: eine Antriebswelle (2), die mit einem Differentialmechanismus (4, 6, 8, 10) verbunden ist, der zwei Abtriebswellen (12, 20) aufweist, wobei die beiden Abtriebswellen jeweils erste und zweite koaxial angebrachte Sonnenräder (S1, S2) eines Planetengetriebes tragen, die jeweils in erste und zweite Planetenradsätze (P1, P2) eingreifen, wobei das Übersetzungsverhältnis des ersten Sonnenrads mit dem ersten Planetenradsatz sich von dem des zweiten Sonnenrads mit dem zweiten Planetenradsatz unterscheidet, wobei jedes erste Planetenrad mit einem zugehörigen zweiten Planetenrad verbunden ist, so dass es sich damit um eine zugehörige gemeinsame Planetenwelle (22) dreht, wobei die Planetenwellen mit einem gemeinsamen Träger (24) verbunden sind, der koaxial zum ersten und zweiten Sonnenrad drehbar angebracht ist, ein einzelnes selektiv betätigbares Drehzahlwechselmittel (26, 28), das mit dem Träger verbunden ist und dazu ausgebildet ist, die Rotationsgeschwindigkeit des Trägers um seine Achse zu erhöhen oder zu verringern, wobei das Getriebesystem weiter mindestens einen Sensor (38) umfasst, der dazu ausgebildet ist, ein Signal zu erzeugen, das einen Betriebsparameter des Fahrzeugs oder seines Motors angibt, und eine Steuereinheit (36), die mit dem Sensor und dem Drehzahlwechselmittel (26, 28) verbunden und dazu ausgebildet ist, das Drehzahlwechselmittel in Abhängigkeit von dem Signal zu betätigen,
**dadurch gekennzeichnet, dass** das Drehzahlwechselmittel ein Elektromotor/-generator (26, 28) ist, dessen Rotor (26) durch selektiv betätigbare Kopplungsmittel (40) mit dem gemeinsamen Träger (24) und durch zweite selektiv betätigbare Kopplungsmittel (42) mit der Antriebswelle oder den beiden Abtriebswellen verbunden ist.

2. Getriebesystem nach Anspruch 1, bei dem der Differentialmechanismus (4, 6, 8, 10) ein Planetengetriebe umfasst, das ein Hohlrad (4) aufweist, das mit einem Satz Planetenräder (6) in Eingriff steht, die von einem Träger (8) getragen sind und auch mit einem Sonnenrad (10) in Eingriff stehen, wobei der Träger und das Sonnenrad mit den beiden Abtriebswellen (12, 20) verbunden sind.

3. Getriebesystem nach Anspruch 1, bei dem der Rotor (26) des Motors/Generators mit der Antriebswelle (2) verbunden ist und die Antriebswelle dritte selektiv betätigbare Kopplungsmittel an einer Position zwischen ihrer Verbindung mit dem Rotor des Motors/Generators und ihrer Verbindung mit dem Differentialmechanismus (4, 6, 8,10) aufweist.

4. Fahrzeug mit Vierradantrieb umfassend ein Getriebesystem nach einem der vorhergehenden Ansprüche, einen Motor mit einer Abtriebswelle, die mit der Antriebswelle des Getriebesystems verbunden ist, und zwei Paare angetriebener Räder, die mit einer zugehörigen der beiden Abtriebswellen (12, 20) des Getriebesystems verbunden sind.

5. Fahrzeug nach Anspruch 4, bei dem die elektrischen Verbindungen des Stators des Motors/Generators (26, 28) mit einer Batterie verbunden sind, die dazu ausgebildet ist, dass sie den Motor/Generator selektiv antreibt oder von ihm aufgeladen wird.

## Revendications

1. Système de transmission pour véhicule, le système de transmission comprenant un arbre d'entrée (2) relié à un mécanisme différentiel (4, 6, 8, 10), qui comprend deux arbres de sortie (12, 20), les deux arbres de sortie portant respectivement une première et une seconde roue solaire montées de manière coaxiale (S1, S2), d'un ensemble d'engrenages planétaires qui est respectivement en prise avec un premier et un second train de roues planétaires (P1, P2), les rapports d'engrenage de la première roue solaire avec le premier train de roues planétaires et de la seconde roue solaire avec le second train de roues planétaires étant différents, chaque première roue planétaire étant reliée à une seconde roue planétaire respective pour tourner avec celle-ci autour d'un arbre planétaire commun respectif (22), les arbres planétaires étant reliés à un support commun (24) qui est monté à rotation de manière coaxiale avec la première et la seconde roue solaire, un seul moyen de changement de vitesse pouvant être actionné de manière sélective (26, 28), qui est relié au support et est prévu pour augmenter ou diminuer la vitesse de rotation du support autour de son axe, le système de transmission comprenant en outre au moins un capteur (38) prévu pour émettre un signal indicatif d'un paramètre de fonctionnement du véhicule ou de son moteur, et un contrôleur (36) relié au capteur et au moyen de changement de vitesse (26, 28) et prévu pour actionner le moyen de changement de vitesse en réponse audit signal,
**caractérisé en ce que** le moyen de changement de vitesse est un moteur/générateur électrique (26, 28), le rotor (26) de celui-ci étant relié au support commun (24) par un moyen d'accouplement pouvant être actionné de manière sélective (40) et à un arbre parmi l'arbre d'entrée et les deux arbres de sortie par un second moyen d'accouplement pouvant être actionné de manière sélective (42).

2. Système de transmission selon la revendication 1, dans lequel le mécanisme différentiel (4, 6, 8, 10) comprend un ensemble d'engrenages planétaires comprenant un anneau (4) en prise avec un train de roues planétaires (6), qui sont portées par un support (8) et qui sont également en prise avec une roue solaire (10), le support et la roue solaire étant reliés aux deux arbres de sortie (12, 20).

3. Système de transmission selon la revendication 1, dans lequel le rotor (26) du moteur/générateur est relié à l'arbre d'entrée (2) et dans lequel l'arbre d'entrée comprend un troisième moyen d'accouplement pouvant être actionné de manière sélective dans une position située entre son accouplement au rotor du moteur/générateur et son accouplement au mécanisme différentiel (4, 6, 8, 10).

4. Véhicule à quatre roues motrices comprenant un système de transmission selon l'une quelconque des revendications précédentes, un moteur à arbre de sortie relié à l'arbre d'entrée du système de transmission, et deux paires de roues motrices reliées à un arbre respectif des deux arbres de sortie (12, 20) du système de transmission.

5. Véhicule selon la revendication 4, dans lequel les raccordements électriques du stator du moteur/générateur (26, 28) sont reliés à une batterie prévue pour sélectivement entraîner le moteur/générateur ou être rechargée par lui.
